# FASCICULE DE BREVET EUROPEEN

(11) **EP 3 571 666 B1**
(45) Date de publication et mention de la délivrance du brevet: **19.03.2025**
(21) Numéro de dépôt: 18702767.7
(22) Date de dépôt: 17.01.2018
(51) Int. Cl.: G06T 7/50

(54) **PROCEDE DE CREATION D'UNE REPRESENTATION TRIDIMENSIONNELLE VIRTUELLE D'UNE PERSONNE**
VERFAHREN ZUR ERSTELLUNG EINER VIRTUELLEN DREIDIMENSIONALEN DARSTELLUNG EINER PERSON
METHOD FOR CREATING A VIRTUAL THREE-DIMENSIONAL REPRESENTATION OF A PERSON

(30) Priorité: 17.01.2017 FR 1750342
(43) Date de publication de la demande: 27.11.2019
(73) Titulaire: TOOiin, 92310 Sèvres (FR)
(72) Inventeur: TOUBAL, Karim, 75015 Paris (FR)
(74) Mandataire: IP Trust
(86) Numéro de dépôt international: PCT/FR2018/050114
(87) Numéro de publication internationale: WO 2018/134521

(56) Documents cités:
- GB-A- 2 535 742
- LEIPNER ANJA ET AL: "Multi-camera system for 3D forensic documentation", FORENSIC SCIENCE INTERNATIONAL, ELSEVIER B.V, AMSTERDAM, NL, vol. 261, 11 February 2016 (2016-02-11), pages 123 - 128, XP029447867, ISSN: 0379-0738, DOI: 10.1016/J.FORSCIINT.2016.02.003
- MIKE: "Create a Realistic 3-D Avatar for VR in this Booth", 3 November 2016 (2016-11-03), pages 1 - 3, XP055414988, Retrieved from the Internet <URL:http://www.pxvr.com/create-a-realistic-3-d-avatar-for-vr-in-this-booth/> [retrieved on 20171012]
- BERNARD BUXTON ET AL: "Reconstruction and Interpretation of 3D Whole Body Surface Images", 1 January 2002 (2002-01-01), XP055415327, Retrieved from the Internet <URL:http://douros.org/upload/461353/documents/buxton_dekker_douros_vassilev_scan2000.pdf> [retrieved on 20171012]

## Description

### Domaine de l'invention

La présente invention concerne le domaine de la réalité virtuelle et plus précisément la création de représentations numériques tridimensionnelles photoréalistes à partir d'une série d'images d'une personne humaine et au moyen de techniques de photogrammétrie.

Le scan de personnes en 3D (aussi appelé body scan 3D, scan corporel 3D ou scan 3D intégral) permet de numériser le corps d'un sujet grâce à un équipement parfois appelé scanner corporel 3D.

De la même manière qu'une photographie capture l'image d'une personne en deux dimensions, un scanner 3D enregistre la forme du corps en trois dimensions. Le résultat est un fichier 3D (aussi appelé modèle 3D) qui peut ensuite être stocké ou modifié sur ordinateur, et éventuellement envoyé à une imprimante 3D pour être fabriqué.

Les secteurs utilisant principalement le scan 3D de corps humain sont le jeu, la médecine et la mode pour créer des avatars fixes ou animés ou encore pour fabriquer, par exemple, des figurines réalistes de personnes.

Deux technologies sont essentiellement utilisées pour le body scan 3D : la photogrammétrie qui utilise la reconstruction de volumes en 3D à partir de photographies classiques ; et la lumière structurée, basée sur la déformation d'une lumière projetée qui permet ainsi de calculer la distance, et donc la position des points du corps.

La présente invention s'inscrit dans la première famille de solutions, mettant en oeuvre des traitements par photogrammétrie.

### Etat de la technique

On connaît dans l'état de la technique le brevet européen EP1322911 décrivant une solution d'acquisition d'une représentation tridimensionnelle d'un corps humain. Le capteur d'images utilisé pour la prise de vue est complété par des projecteurs de motifs lumineux additionnels qui sont fixés sur le corps et qui projettent des structures géométriques simples tels que des points et des lignes sur ledit corps. Ces structures visibles sans l'image du viseur facilitent l'orientation manuelle du capteur d'images et le positionnement du capteur d'images à la distance correcte par rapport au corps, lors de réalisation des nombreux clichés individuels, se chevauchant, nécessaires à l'évaluation photogrammétrique. Cette orientation prédéterminée manuellement facilite l'affectation automatique des marques photogrammétriques dans les paires d'images individuelles au moyen de procédés de traitement d'image et permet de réaliser cette affectation automatisée de manière plus sûre. Dans un mode de réalisation préféré de l'invention, les projecteurs sont éteints lors de la prise de vue proprement dite.

On connaît aussi la demande de brevet américain US2012206587 décrivant un système d'imagerie de surface de peau pour capturer au moins une image de la peau du corps d'un patient, comprenant une base et une pluralité de capteurs d'images pouvant être connectés à ladite base, disposés dans un agencement prédéterminé. Chaque capteur d'image réalise une capture de l'image d'une zone prédéterminée du corps. Ces capteurs fournissent une série d'images. Une unité de traitement communique avec lesdits capteurs d'image pour :
(i) recueillir l'ensemble d'images provenant desdits capteurs d'image;
(ii) analyser ledit ensemble d'images; (iii) construire un enregistrement de données personnelles associées à la peau dudit corps dudit patient.

La demande de brevet internationale WO 2012110828 décrit un procédé permettant de réaliser un modèle corporel virtuel d'une personne, créé à partir d'un petit nombre de mesures et d'une photographie unique, combiné avec une ou plusieurs images de vêtements. Le modèle corporel virtuel offre une représentation réaliste du corps de l'utilisateur et est utilisé pour visualiser des visualisations d'ajustement photoréalistes de vêtements, coiffures, maquillage, et/ou d'autres accessoires. Les vêtements virtuels sont créés à partir de couches s'appuyant sur des photographies de vêtements réels prises à partir de plusieurs angles. En outre, le modèle corporel virtuel est utilisé dans de nombreux modes de réalisation de recommandations manuelles et automatiques de vêtements, maquillage, et coiffure, par exemple à partir de canaux, d'amis, et d'entités de mode. Le modèle corporel virtuel peut être partagé par exemple pour la visualisation et des commentaires sur le style. De plus, on l'utilise également pour permettre aux utilisateurs d'acheter des vêtements s'ajustant à d'autres utilisateurs, pouvant convenir comme cadeaux ou analogues. La mise en œuvre peut également servir dans des ventes en ligne de pair à pair dans lesquelles des vêtements peuvent être achetés en sachant que la silhouette corporelle et la taille du vendeur sont similaires à celles de l'utilisateur.

La publication "Multi-camera system for 3D forensic documentation" de Leipner Anja et al., dans Forensic Science International, vol. 261, pages 123-128, divulgue l'acquisition d'un modèle 3D d'une personne en utilisant une cabine de forme cylindrique dans laquelle sont placées 64 caméras.

Le brevet GB 2 535 742 A décrit un système similaire avec des colonnes de caméras pouvant être disposées de différentes manières.

La publication sur Internet "Create a Realistic 3-D Avatar for VR in this Booth", par Nike le 3 novembre 2016 divulgue une cabine de forme ovoïde munie de six caméras pour l'acquisition d'un avatar 3D d'une personne.

### Inconvénients des solutions de l'art antérieur

Les solutions de l'art antérieur ne sont pas totalement satisfaisantes.

Certaines solutions mettent en œuvre un capteur d'images mobile se déplaçant autour du sujet. En cas de mouvement du sujet pendant la phase d'acquisition des images, le traitement par photogrammétrie est perturbé.

D'autres solutions nécessitent l'apposition de marqueurs ou de zones structurées, ce qui impose une étape de préparation du sujet et ne permet pas d'acquérir une image photoréaliste.

D'autres solutions encore prévoit l'acquisition d'images à partir de capteurs d'images, mais ne permettent pas d'obtenir une qualité satisfaisante par une acquisition unique en lumière naturelle.

### Solution apportée par l'invention

Afin de remédier à ces inconvénients, l'invention concerne selon son acception la plus générale un procédé de création d'une représentation tridimensionnelle virtuelle d'une personne comportant les étapes de :
a) acquisition d'une pluralité d'images d'une personne placée dans une position de référence dans une cabine d'imagerie
b) calcul par photogrammétrie d'un maillage brut de ladite personne réelle,
caractérisée en ce que ladite étape d'acquisition de la pluralité d'images consiste à enregistrer une série d'au moins quatre-vingts images simultanées, et de préférence d'au moins cents images simultanées, provenant de capteurs d'images répartis sur la surface intérieure d'une cabine fermée de forme ovoïde munie d'une porte d'accès, lesdits capteurs d'images étant répartis de manière homogène par rapport à l'axe de symétrie de ladite cabine.

On entend par « capteur d'images » au sens du présent brevet un capteur d'images fixes équipé d'une optique pour la prise de vue en lumière naturelle.

Une « position de référence » privilégiée serait une position dans laquelle la personne présente préférentiellement une posture droite, les bras légèrement écartés du corps, les doigts écartés les uns des autres, les pieds également écartés l'un de l'autre selon une distance prédéfinie (avantageusement au moyen de marquages au sol de la cabine), un regard dirigé vers l'horizon et une expression faciale neutre.

En prévoyant ainsi une acquisition simultanée des images de la personne placée en position de référence dans une cabine de forme ovoïde à l'aide d'un nombre minimal de capteurs, à savoir au moins quatre-vingts, on parvient à générer une image reconstruite précise et complète de la personne placée dans la cabine.

Outre sa participation à la précision de la reconstruction de l'image de la personne en position de référence, la forme ovoïdale de la cabine permet également d'assurer un positionnement et une orientation optimaux des capteurs, ces derniers étant directement dirigés vers la personne et ce, indépendamment de sa taille et de sa corpulence. De préférence, la surface photosensible des capteurs d'images présente une taille inférieure à 25x25 millimètres. L'utilisation d'au moins quatre-vingts capteurs ainsi dimensionnés a pour avantage d'optimiser le volume de la cabine et ainsi de parvenir en un encombrement optimum de cette dernière.

De préférence, la surface intérieure de ladite cabine présente des motifs contrastés non répétitifs, le procédé comportant au moins une étape de calibration consistant à acquérir une séance d'images de la cabine sans présence d'une personne, l'étape de photogrammétrie comportant une étape de calcul d'une image ID par soustraction de l'image acquise en présence d'une personne dans la cabine et de l'image de calibration correspondant au même capteur d'images.

Avantageusement, l'étape de photogrammétrie comporte les étapes de création d'un nuage de points 3D par extraction dans chacune des images détourées IDᵢ des points caractéristiques PCᵢⱼ et enregistrement des coordonnées de chacun des points caractéristiques PCᵢⱼ et de construction du maillage brute à partir des points caractéristiques PCᵢⱼ ainsi repérés et calcul de la texture enveloppe.

Selon une variante, le maillage 3D et la texturation font l'objet d'un traitement additionnel de lissage.

Selon une autre variante, le procédé comporte une étape additionnelle consistant à fusionner ledit maillage brut avec un maillage modèle MM organisé en groupe de zones d'intérêts correspondant à des sous-ensembles de polygones correspondant à des parties signifiantes, à déterminer sur le maillage brut correspondant aux points singuliers identifiés préalablement sur le maillage modèle MM, et à appliquer ensuite un traitement consistant à déformer le maillage du modèle MM pour faire correspondre localement chaque point singulier avec la position du point singulier associé sur le maillage brute MBI, et recalculer la position de chacun des points caractéristiques du maillage du modèle MM.

Avantageusement, ladite étape de transformation dudit maillage brut en un maillage standardisé comprend l'identification automatique d'une pluralité de points caractéristiques du corps humain sur ledit maillage brut, par des traitements de reconnaissance d'éléments enregistrés dans une bibliothèque de points d'intérêt sous forme de table associant une étiquette numérique à une règle de caractérisation.

L'invention concerne également une cabine de prise de vue constituée par une structure fermée présentant une porte d'accès, comportant une pluralité de capteurs d'images orientés vers l'intérieur de la cabinet, caractérisée en ce que ladite cabine présente une forme intérieure ovoïde présentant au moins quatre-vingts capteurs d'images, et de préférence cents capteurs d'images, répartis sur la surface intérieure de ladite forme ovoïde de manière homogène par rapport à l'axe de symétrie de ladite cabine.

De préférence la cabine présente une section transversale médiane maximale comprise entre 2 et 5 m, et de préférence inférieure à 2 m.

### Description détaillée d'un exemple de l'invention

La présente invention sera mieux comprise à la lecture de la description qui suit concernant un exemple non limitatif de réalisation illustré par les dessins annexés où :

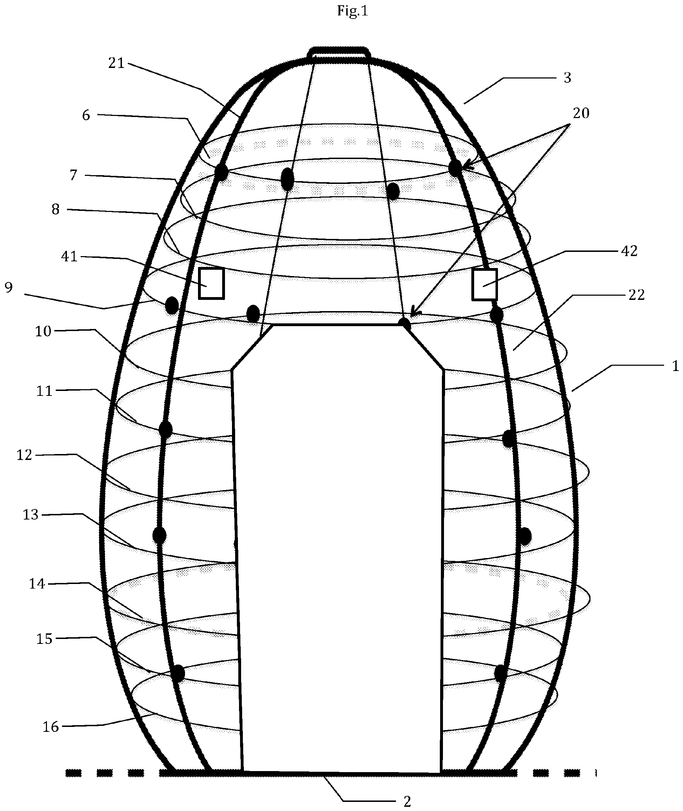

- la figure 1 représente une vue schématique d'une cabine d'acquisition photogrammétrique
- la figure 2 représente une vue schématique de l'architecture matérielle d'une installation pour la mise en œuvre de l'invention

### Système d'acquisition du maillage brut d'une personne

La mise en œuvre de la présente invention comporte une première étape d'acquisition d'images d'une personne réelle.

A cet effet, une cabine comprend un groupe de capteurs d'images de prises de vue (20), disposé sur une enveloppe de forme générale ovoïde, entourant la personne.

La hauteur de la cabine est d'environ 250 centimètres, et le diamètre intérieur maximum est d'environ 200 centimètres.

La cabine est constituée par une paroi ovoïde (1) de section transversale circulaire, s'ouvrant par une porte (2), et prolongée à sa partie supérieure (3) par une coiffe hémisphérique et fermée à sa partie inférieure par un plancher (4).

La cabine définit ainsi une surface de révolution dont la génératrice présente une section courbe propre à entourer la personne dont on réalise la séquence d'images.

Cette surface supporte les capteurs d'images de prise de vue (20) répartis de manière régulière, pour former des recouvrements des champs de prise de vue. Les capteurs d'images (20) sont fixes par rapport au support et à la personne.

Dans l'exemple décrit, la cabine comporte 260 capteurs d'images (20), répartis selon une dizaine de strates transversales (6 à 16). L'espacement entre deux strates varie, l'espacement entre deux strates consécutives étant plus important pour les strates médianes (11 à 13) que pour les strates supérieures (6 à 10) ou inférieures (13 à 16). Les capteurs d'images sont des capteurs haute définition (8 MO).

Le nombre de capteurs d'images (20) est préférentiellement supérieur à 100, répartis de manière homogène sur la surface intérieure de la cabine à l'exception des surfaces correspondant à la porte et au plancher.

Les strates (10 à 16) coupées par la porte (2) comporte vingt capteurs d'images répartis de manière homogène angulairement, sauf au niveau de la porte (2).

Les strates (8 et 9) comportent un nombre plus important de capteurs d'images (20), par exemple 24, en raison de l'absence de porte. Les strates (6 et 7) présentant un rayon plus réduit comportent un nombre plus restreint de capteurs d'images (20).

Les capteurs d'images (20) ne sont pas nécessairement alignés sur des mêmes longitudes, une répartition angulaire variant d'une strate à l'autre permettant d'augmenter les zones de recouvrement des prises de vue.

Chaque capteur d'images (20) est connecté à un circuit électronique local comportant des moyens de communication et un calculateur exécutant un programme commandant :
- l'activation et la désactivation du capteur d'images qui lui est associé
- optionnellement, l'enregistrement dans une mémoire locale des images acquises et la bufférisation des images du capteur d'images associé
- les paramètres optiques du capteur d'images tels que l'ouverture, la sensibilité, la balance des blancs, la résolution, la balance des couleurs, le temps de prise de vue,... Ce contrôle est effectué en fonction de données provenant d'un serveur commun à tous les capteurs d'images (20), ainsi que de données locales captées par le capteur d'images associé
- l'activation d'une alerte visuelle ou sonore associée au capteur d'images local
- la transmission des images en temps réel ou les images enregistrées localement vers un serveur distant.

La cabine comporte un serveur dédié, comportant des moyens de communication avec les cartes locales de chacun des capteurs d'images, réalisant des fonctions de routeur et de pilotage des capteurs d'images (20) en fonction des données provenant d'un serveur distant.

La cabine comporte par ailleurs des sources de lumière réparties à la surface intérieure de la cabine pour former un éclairage omnidirectionnel et homogène.

Les sources de lumière sont constituées dans l'exemple décrit par huit bandes de LEDS (21, 22) disposés selon des longitudes de la cabine, réparties angulairement de manière régulière, sauf au niveau de la porte (2).

Les sources de lumière sont optionnellement commandées par le serveur dédié.

Optionnellement, la surface intérieure de la cabine présente un fond uniforme avec des motifs contrastés géométriques anguleux non répétitifs, permettant de procéder à une localisation du capteur d'images par analyse du fond de l'image.

Optionnellement, la cabine comporte un capteur d'images additionnelles avec un grand champ, permettant de visualiser la personne de face, pour la transmission à un opérateur externe d'une image de la position de la personne pendant la séquence d'acquisition des images.

La cabine comporte également des enceintes acoustiques (41, 42) réparties angulairement autour de la tête, pour diffuser des instructions vocales.

### Architecture électronique

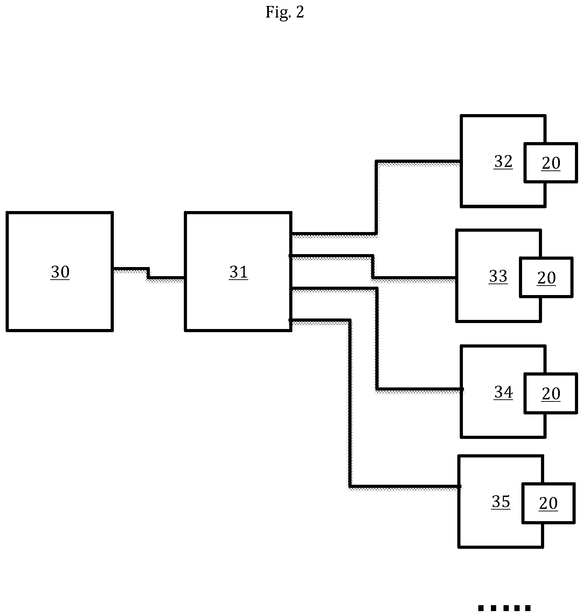

La figure 2 représente une vue plus détaillée de l'architecture électronique.

L'installation comporte un ordinateur central (30), communiquant le serveur dédié (31) de la cabine. Le serveur dédié (31) communique localement, dans la cabine, avec les circuits électroniques locaux (32 à 35). Chacun des circuits électroniques locaux (32 à 35) comporte, à titre d'exemple, un capteur d'images (20) dont la résolution est de l'ordre de 5 mégapixels et présentant une ouverture nominale de f/2.8, avec une focale fixe et un champ de prise de vue de 42°H.

L'installation comporte en outre, au niveau de la cabine, des commutateurs réseau évitant les collisions réseau.

### Architecture fonctionnelle

La description qui suit concerne un exemple de mise en œuvre de l'invention, présentant les étapes principales :
- acquisition de l'image d'une personne dans la cabine et transfert vers l'ordinateur assurant le traitement principal
- photogrammétrie
- première alternative de lissage pour la réalisation d'un volume photoréaliste
- deuxième alternative de recalcul de la topologie
- création de l'avatar.

Périodiquement, on procède à une calibration de la cabine nue, sans personne, consistant à acquérir une séquence d'images de la surface structurée de la cabine. Cette calibration permet de recalculer le positionnement réel de chacun des capteurs d'images (20) par l'analyse des motifs non répétitifs figurant sur la surface intérieur de la cabine, et d'enregistrer pour chacun des capteurs d'images de la zone de fond, en vue de traitement ultérieur consistant à soustraire de l'image acquise en présence d'une personne, l'image de la même zone sans personne.

### Acquisition de l'image d'une personne

Lorsque la personne est positionnée dans la cabine, on commande la succession de traitements suivants.

Une alerte visuelle ou sonore indique à la personne le démarrage de la séquence de prise de vue, incitant la personne à rester immobile jusqu'à l'alerte de fin de séquence.

Typiquement, la durée de la séquence de prise de vue est inférieure à une seconde.

Optionnellement, un capteur de profondeur infrarouge, par exemple un capteur d'images 3D de profondeur, contrôle la position de la personne dans la cabine, et déclenche automatiquement la séquence d'acquisition des images lorsque la personne est bien positionnée, et à défaut déclenche des commandes vocales indiquant à la personne les erreurs de positionnement, par exemple « relevez légèrement votre bras » ou « redressez votre tête » ou « tournez vous vers la droite » jusqu'à ce que le capteur détecte que la position de la personne est conforme à une position nominale.

Le serveur dédié (31) commande l'éclairage de la cabine, en abaissant le niveau lumineux pendant la phase de positionnement de la personne, puis augmentant le niveau lumineux pendant la phase d'acquisition d'images, et abaissant ensuite à nouveau le niveau lumineux à la fin de la phase d'acquisition d'images. Le serveur dédié (31) peut commander de manière synchrone des effets sonores associés à chacune de ces phases, pour aider la personne à rester immobile pendant la phase d'images et à suivre l'évolution du processus.

Le serveur dédié (31) commande, pour la phase d'acquisition des images, l'activation simultanée de tous les capteurs d'images (20) par la transmission aux circuits électroniques locaux (32 à 35) d'une commande d'activation, puis commande le transfert des données enregistrées localement vers le serveur dédié (31) ou vers un ordinateur distant. Ce transfert peut être simultané ou différé pour optimiser la bande passante disponible.

### Photogrammétrie

L'étape de photogrammétrie est appliquée sur l'ensemble des images numériques provenant des capteurs d'images (20), par exemple 260 images numériques acquises au même moment de la personne positionnée dans la cabine.

Le traitement comporte une première étape de prétraitement de chacune des images Iᵢ (i étant compris entre 1 et 260 dans l'exemple décrit) :
- Création d'une image détourée IDᵢ par soustraction de l'image acquise Iᵢ et de l'image de fond IFᵢ de la même zone enregistrée pendant la phase de calibration, et enregistrement du couple d'images (Iᵢ, IDᵢ)
- Calcul des coordonnées (Xᵢ, Yᵢ Zᵢ ; Aᵢ Bᵢ Cᵢ, Dᵢ) ou X,Y,Z correspondant aux coordonnées de le capteur d'images dans le référentiel de la cabine, A,B,C correspondant à l'orientation angulaires (angles d'Euler) de le capteur d'images dans le référentiel de la cabine et D est un paramètre binaire correspondant à l'orientation de le capteur d'images sur l'axe prédéfini par les angles ABC, pour chacune des images Iᵢ et enregistrement, pour chacun des couple d'images (Iᵢ, IDᵢ) des coordonnées ainsi calculées. Ce calcul est par exemple exécuté avec le logiciel MicMac de l'IGN (nom commerciaux) ou VisualSFM (nom commercial)
- Création d'un nuage de points 3D par extraction dans chacune des images détourées IDᵢ des points caractéristiques PCᵢⱼ et enregistrement des coordonnées de chacun des points caractéristiques PCᵢⱼ
- Construction du maillage brute à partir des points caractéristiques PCᵢⱼ ainsi repérés et calcul de la texture enveloppe.

Le résultat de cette étape est constitué par un maillage 3D et une texture associée.

Le maillage 3D MBI correspondant au maillage brut de la personne originelle est enregistré dans un format usuel, par exemple OBJ, qui est un format de fichier d'échange contenant la description d'une géométrie 3D.

La texture est enregistrée dans un format image PNG.

### Première alternative de lissage pour la réalisation d'un volume photoréaliste

Pour une première application, le maillage 3D et la texturation ainsi calculés font l'objet d'un traitement additionnel de lissage.

Ce traitement consiste à supprimer le bruit dans le maillage 3D non lissé, présentant un niveau de maillage nul en procédant à une réduction de la résolution par un calcul de moyenne locale appliqué à chacun des points caractéristiques PCᵢⱼ et en affectant une orientation de la normale à chacun de ces points caractéristiques PCᵢⱼ, pour enregistrer un maillage lissé sous forme d'une combinaison de PCL_{1,m} et de normales N_{n,m}.

Ce traitement est réalisé à l'aide d'un logiciel de modification de maillage 3D tel que AUTOCAD (nom commercial).

Le résultat de ce traitement est un volume 3D photoréaliste correspondant à la personne dont l'image a été acquise lors de la phase d'acquisition.

La texture enveloppante présente une résolution adaptée à l'usage envisagé (par exemple impression 3D).

Le résultat du traitement est enregistré à un format de transfert, par exemple le format OBJ.

### Second alternative : Recalcul de la topologie

### Création de l'avatar.

Une autre application consiste à créer, à partir du maillage 3D obtenu lors de l'étape de photogrammétrie, un avatar 3D.

A cet effet, on utilise un maillage modèle MM enregistré au format OBJ, organisé en groupe de zones d'intérêts correspondant à des sous-ensembles de polygones correspondant à des parties signifiantes, par exemple du groupe de polygones correspondant à la bouche, à un doigt, à un sein, à un bras... Chaque sous-groupe signifiant est associé à un identifiant, et éventuellement à des marqueurs correspondant à des traitements particuliers lors de la création d'un avatar (par exemple traitement « d'habillage »). Un même polygone peut appartenir à plusieurs sous-groupes.

Le maillage modèle MM peut optionnellement faire l'objet d'un traitement consistant à calculer un modèle déformé MMD, conservant les mêmes sous-ensembles de polygones et les mêmes identifiants, mais avec des déformations locales de certains polygones, pour créer, par exemple, le modèle MMD d'un homme musclé à partir d'un modèle MM d'un homme standard.

Pour créer un avatar correspondant au modèle MM choisi à partir du maillage brut MBI, on procède à un calcul de retopologie.

Ce calcul nécessite l'identification des points caractéristiques du maillage brut MBI qui seront mis en correspondance avec des points caractéristiques correspondants du maillage modèle MM.

A cet effet, on détermine sur le maillage brut des points singuliers identifiés préalablement sur le maillage modèle MM, par exemple le coin de l'oeil, le coin de la bouche, l'extrémité des doigts,...

On applique ensuite un traitement consistant à déformer le maillage du modèle MM pour faire correspondre localement chaque point singulier avec la position du point singulier associé sur le maillage brute MBI, et recalculer la position de chacun des points caractéristiques du maillage du modèle MM, par un logiciel de morphing 3D.

Le résultat de ce traitement est un maillage MMI enregistré au format OBJ, correspondant à l'adaptation du modèle à la morphologie de la personne originelle.

On utilise ce maillage MMI pour créer un squelette d'animation complet.

Ce squelette est créé à partir du maillage MMI et de points de contrôle, sur le maillage, correspondant aux articulations du squelette numérique et d'association de ces points de contrôle aux points d'articulation du squelette.

On positionne ensuite les éléments annexes (dents, langue, orbite des yeux,...) provenant d'une bibliothèque d'éléments sur l'avatar ainsi créé, en prenant en compte les sous-groupes précités.

On applique ensuite un processus de maillage (skinning) consistant à associer chaque point caractéristique à une portion de la peau de l'objet à animer, cependant une portion donnée de la peau peut être associée à plusieurs os, selon une pondération précise et on enregistre ces informations dans un fichier numérique.

### Applications

L'invention permet de réaliser des représentations tridimensionnelles photoréalistes pour diverses applications telles que le fitness, pour dessiner son corps idéal plus musclé et/ou plus mince, à partir de modèles de référence MM, fusionnés avec le maillage brut MBI d'une personne physique réelle. Cette représentation peut être montrée à un coach pour suivre un programme d'entraînement personnalisé afin de ressembler à son avatar dans un futur prochain.

L'acquisition périodique de représentations photoréalistes permet de vérifier le progrès accompli et l'effort nécessaire pour atteindre l'objectif.

L'utilisateur peut ainsi se fixer un objectif visible et mesurable pour « sculpter » son corps.

Les applications concernent aussi le domaine de la chirurgie esthétique pour visualiser le résultat postopératoire et l'utiliser comme support de consultation face à un chirurgien.

Elle permet de prendre une décision en face du praticien en ayant un résultat au préalable.

Une autre application concerne le domaine du prêt à porter (essayage en ligne avant achat), en offrant la possibilité d'habiller son avatar avec la collection d'un créateur et se voir en train de défiler, essayer virtuellement les vêtements avant achat, et zoomer pour observer tous les détails du vêtements portés (tailles, retouches nécessaires, couleurs...).

## Revendications

1. - Procédé de création d'une représentation tridimensionnelle virtuelle d'une personne comportant les étapes de :
a) acquisition d'une pluralité d'images d'une personne placée dans une position de référence dans une cabine d'imagerie
b) calcul par photogrammétrie d'un maillage brut de ladite personne réelle
**caractérisé en ce que**
ladite étape d'acquisition de la pluralité d'images consiste à enregistrer une série d'au moins cent images simultanées provenant de capteurs d'images répartis sur la surface intérieure d'une cabine fermée de forme ovoïde munie d'une porte d'accès, lesdits capteurs d'images étant réparties de manière homogène par rapport à l'axe de symétrie de ladite cabine.

2. - Procédé de création d'une représentation tridimensionnelle virtuelle selon la revendication 1, dans lequel la surface photosensible des capteurs d'images présente une taille inférieure à 25x25 millimètres.

3. - Procédé de création d'une représentation tridimensionnelle virtuelle selon la revendication 1 ou la revendication 2, dans lequel la surface intérieure de ladite cabine présente des motifs contrastés non répétitifs, le procédé comportant au moins une étape de calibration consistant à acquérir une séance d'images de la cabine sans présence d'une personne, l'étape de photogrammétrie comportant une étape de calcul d'une image détourée ID par soustraction de l'image acquise en présence d'une personne dans la cabine et de l'image de calibration correspondant au même capteur d'images.

4. - Procédé de création d'une représentation tridimensionnelle virtuelle selon la revendication précédente, dans lequel l'étape de photogrammétrie comporte les étapes de création d'un nuage de points 3D par extraction dans chacune des images détourées IDᵢ des points caractéristiques PCᵢⱼ et enregistrement des coordonnées de chacun des points caractéristiques PCᵢⱼ et de construction du maillage brute à partir des points caractéristiques PCᵢⱼ ainsi repérés et calcul de la texture enveloppe.

5. - Procédé de création d'une représentation tridimensionnelle virtuelle d'une personne selon l'une quelconque des revendications précédentes, dans lequel que le maillage 3D et la texturation font l'objet d'un traitement additionnel de lissage.

6. - Procédé de création d'une représentation tridimensionnelle virtuelle d'une personne selon l'une quelconque des revendications précédentes, comportant une étape additionnelle consistant à fusionner ledit maillage brut avec un maillage modèle MM organisé en groupe de zones d'intérêts correspondant à des sous-ensembles de polygones correspondant à des parties signifiantes, à déterminer sur le maillage brut correspondant aux points singuliers identifiés préalablement sur le maillage modèle MM, et à appliquer ensuite un traitement consistant à déformer le maillage du modèle MM pour faire correspondre localement chaque point singulier avec la position du point singulier associé sur le maillage brut MBI, et recalculer la position de chacun des points caractéristiques du maillage du modèle MM.

7. - Procédé de création d'une représentation tridimensionnelle virtuelle d'une personne selon l'une quelconque des revendications précédentes, comportant une étape de transformation dudit maillage brut en un maillage standardisé comprenant l'identification automatique d'une pluralité de points caractéristiques du corps humain sur ledit maillage brut, par des traitements de reconnaissance d'éléments enregistrés dans une bibliothèque de points d'intérêt sous forme de table associant une étiquette numérique à une règle de caractérisation.

8. - Cabine de prise de vue pour la création d'une représentation tridimensionnelle virtuelle d'une personne constituée par une structure fermée présentant une porte d'accès, comportant une pluralité de capteurs d'images orientées vers l'intérieur de la cabine, dans laquelle ladite cabine présente une forme intérieure ovoïde présentant au moins cent capteurs d'images répartis sur la surface intérieure de ladite forme ovoïde de manière homogène par rapport à l'axe de symétrie de ladite cabine.

9. - Cabine de prise de vue selon la revendication précédente, dans laquelle les capteurs d'images sont munis de capteurs de taille inférieure à 25×25 millimètres.

10. - Cabine de prise de vue selon la revendication 8 ou la revendication 9, présentant une section transversale médiane maximale inférieure à 2 m, ou comprise entre 2 et 5 m.

## Patentansprüche

1. Verfahren zum Erstellen einer virtuellen dreidimensionalen Darstellung einer Person, umfassend die folgenden Schritte:
a) Aufnehmen einer Vielzahl von Bildern einer Person, die sich in einer Referenzposition in einer Bildgebungskabine befindet
b) photogrammetrische Berechnung eines Rohnetzes der realen Person
**dadurch gekennzeichnet, dass:**
der Schritt des Aufnehmens der Vielzahl von Bildern darin besteht, eine Reihe von mindestens einhundert gleichzeitigen Bildern aufzuzeichnen, die von Bildsensoren stammen, die über die Innenfläche einer geschlossenen eiförmigen Kabine mit einer Zugangstür verteilt sind, wobei die Bildsensoren in Bezug auf Symmetrieachse der Kabine homogen verteilt sind.

2. Verfahren zur Erstellung einer virtuellen dreidimensionalen Darstellung nach Anspruch 1, wobei die lichtempfindliche Oberfläche der Bildsensoren eine Größe von weniger als 25x25 Millimetern aufweist.

3. Verfahren zur Erstellung einer virtuellen dreidimensionalen Darstellung nach Anspruch 1 oder Anspruch 2, wobei die Innenfläche der Kabine sich nicht wiederholende kontrastierende Muster aufweist, wobei das Verfahren mindestens einen Kalibrierungsschritt umfasst, der darin besteht, eine Sitzung von Bildern der Kabine ohne Anwesenheit einer Person aufzunehmen, wobei der Photogrammetrieschritt einen Schritt des Berechnens eines ausgeschnittenen Bildes ID durch Subtrahieren des in Anwesenheit einer Person in der Kabine aufgenommenen Bildes und des Kalibrierungsbildes, das demselben Bildsensor entspricht, umfasst.

4. Verfahren zur Erstellung einer virtuellen dreidimensionalen Darstellung nach dem vorhergehenden Anspruch, wobei der Photogrammetrieschritt die Schritte des Erstellens einer 3D-Punktwolke durch Extrahieren der charakteristischen Punkte PCᵢⱼ in jedem der ausgeschnittenen Bilder IDᵢ und Aufzeichnen der Koordinaten jedes der charakteristische Punkte PCᵢⱼ und Aufbauen des Rohnetzes aus den somit ermittelten charakteristischen Punkten PCᵢⱼ und Berechnen der Hüllkurventextur umfasst.

5. Verfahren zur Erstellung einer virtuellen dreidimensionalen Darstellung einer Person nach einem der vorhergehenden Ansprüche, wobei das 3D-Netz und die Texturierung einer zusätzlichen Glättungsverarbeitung unterzogen werden.

6. Verfahren zur Erstellung einer virtuellen dreidimensionalen Darstellung einer Person nach einem der vorhergehenden Ansprüche, umfassend einen zusätzlichen Schritt, der darin besteht, das Rohnetz mit einem Modellnetz MM zu verschmelzen, das in Gruppen von Bereichen von Interesse organisiert ist, die Teilmengen von Polygonen entsprechen, die signifikanten Teilen entsprechen, die auf dem Rohnetz zu bestimmen sind, das den zuvor auf dem Modellnetz MM identifizierten singulären Punkten entspricht, und dann eine Verarbeitung anzuwenden, die darin besteht, das Modellnetz MM derart zu verformen, dass jeder singuläre Punkt lokal mit der Position des zugehörigen singulären Punkts auf dem Rohnetz MBI in Entsprechung gebracht wird, und die Position jedes der charakteristischen Punkte des Modellnetzes MM neu zu berechnen.

7. Verfahren zur Erstellung einer virtuellen dreidimensionalen Darstellung einer Person nach einem der vorhergehenden Ansprüche, umfassend einen Schritt des Transformierens des Rohnetzes in ein standardisiertes Netz, umfassend die automatische Identifizierung einer Vielzahl charakteristischer Punkte des menschlichen Körpers auf dem Rohnetz durch Verarbeitungen zur Erkennung von Elementen, die in einer Bibliothek von Punkten von Interesse in Form einer Tabelle abgespeichert sind, durch die ein digitales Label einer Charakterisierungsregel zugeordnet wird.

8. Aufnahmekabine zur Erstellung einer virtuellen dreidimensionalen Darstellung einer Person, bestehend aus einer geschlossenen Konstruktion mit einer Zugangstür, umfassend eine Vielzahl von Bildsensoren, die zum Inneren der Kabine ausgerichtet sind, wobei die Kabine eine eiförmige Innenform mit mindestens einhundert Bildsensoren aufweist, die über die Innenfläche der eiförmigen Form in Bezug auf die Symmetrieachse der Kabine homogen verteilt sind.

9. Aufnahmekabine nach dem vorhergehenden Anspruch, wobei die Bildsensoren mit Sensoren einer Größe von weniger als 25x25 Millimetern ausgestattet sind.

10. Aufnahmekabine nach Anspruch 8 oder Anspruch 9, die einen maximalen medianen Querschnitt von weniger als 2 m oder zwischen 2 und 5 m aufweist.

## Claims

1. Method for creating a virtual three-dimensional representation of a person comprising the steps of:
a) acquiring a plurality of images of a person placed in a reference position in an imaging booth
b) calculating a raw mesh of said real person by means of photogrammetry
**characterized in that**
said step of acquiring the plurality of images consists in recording a series of at least one hundred simultaneous images from image sensors distributed over the inner surface of an ovoid-shaped closed booth provided with an access door, said image sensors being uniformly distributed with respect to the axis of symmetry of said booth.

2. Method for creating a virtual three-dimensional representation according to claim 1, wherein the photosensitive surface of the image sensors has a size of less than 25x25 millimeters.

3. Method for creating a virtual three-dimensional representation according to claim 1 or claim 2, wherein the inner surface of said booth has non-repetitive contrasting patterns, the method comprising at least one calibration step consisting in acquiring a session of images of the booth without a person present, the photogrammetry step comprising a step of calculating a cut-out image ID by subtracting the image acquired in the presence of a person in the booth and the calibration image corresponding to the same image sensor.

4. Method for creating a virtual three-dimensional representation according to the preceding claim, wherein the photogrammetry step comprises the steps of creating a 3D point cloud by extracting characteristic points PCᵢⱼ from each of the IDᵢ cut-out images and recording the coordinates of each of the characteristic points PCᵢⱼ, and constructing the raw mesh from the characteristic points PCᵢⱼ thus located and calculating the casing texture.

5. Method for creating a virtual three-dimensional representation of a person according to any of the preceding claims, wherein the 3D mesh and texturing are subjected to additional smoothing processing.

6. Method for creating a virtual three-dimensional representation of a person according to any of the preceding claims, comprising an additional step consisting in merging said raw mesh with an MM model mesh organized into groups of zones of interest corresponding to subsets of polygons corresponding to significant parts, determining on the corresponding raw mesh the singular points previously identified on the MM model mesh, and then applying processing consisting in deforming the MM model mesh to match each singular point locally with the position of the associated singular point on the raw MBI mesh, and recalculating the position of each of the characteristic points of the MM model mesh.

7. Method for creating a virtual three-dimensional representation of a person according to any of the preceding claims, comprising a step of transforming said raw mesh into a standardized mesh comprising automatically identifying a plurality of characteristic points of the human body on said raw mesh, by element recognition processes recorded in a library of points of interest in the form of a table associating a digital label with a characterization rule.

8. Image capturing booth for creating a virtual three-dimensional representation of a person consisting of a closed structure having an access door, comprising a plurality of image sensors oriented toward the interior of the booth, wherein said booth has an ovoid interior shape having at least one hundred image sensors distributed uniformly over the inner surface of said ovoid shape with respect to the axis of symmetry of said booth.

9. Image capturing booth according to the preceding claim, wherein the image sensors are provided with sensors smaller than 25x25 millimeters.

10. Image capturing booth according to either claim 8 or claim 9, having a maximum median cross section of less than 2 m, or between 2 and 5 m.
